# EUROPÄISCHE PATENTANMELDUNG

(11) **EP 2 039 948 A1**
(43) Veröffentlichungstag der Anmeldung: **25.03.2009**
(21) Anmeldenummer: 07116772.0
(22) Anmeldetag: 19.09.2007
(51) Int. Cl.: F16B 39/04, F16B 39/12, F16B 45/00, B66C 1/36, F27B 3/18, F27D 3/00, F27D 11/10, H05B 7/14, B66C 1/34

(54) **Montagehilfsmittel für Elektrodenstrang-Montage**

(71) Anmelder: SGL Carbon AG, 65203 Wiesbaden (DE)
(72) Erfinder: Walzel, Günter, 86682, Genderkingen (DE); Mieke, Peter, 86647, Buttenwiesen (DE); Nikodem, Rainer, 86637, Wertingen (DE)
(74) Vertreter: Rottmayer, Hans

(57) **Zusammenfassung**

Die Erfindung betrifft ein Montagehilfsmittel (1), bestehend aus einer Gewindehülse (4) mit einem Haken (5), die beweglich in dem Montagehilfsmittel (1) angeordnet sind, wobei das Montagehilfsmittel (1) mindestens aus einer Deckplatte (2) und einer bügelartig daran befestigten Hebeöse (3) besteht und die Gewindehülse (4) eine Wegstrecke durch die Deckplatte (2) ausführen kann, insbesondere für die Verwendung bei der Elektrodenstrang-Montage aus miteinander verschraubten Elektrodenabschnitten, bei dem die Gewindehülse (4) mindestens eine solche Wegstrecke durch die Deckplatte (2) des Montagehilfsmittels (1) bewegt werden kann, wie für die Schraubverbindung eines Elektrodenabschnitts mit einem Nippel notwendig ist, wobei die Wegstrecke durch ein am oberen Ende der Gewindehülse (4) angeordnetes Sicherungselement (10) begrenzt ist, welches das Herausschrauben zuverlässig verhindert.

## Beschreibung

Die Erfindung betrifft einen Montagehilfsmittel, bestehend aus einer Gewindehülse mit einem Haken, die beweglich in dem Montagehilfsmittel angeordnet sind, wobei das Montagehilfsmittel mindestens aus einer Deckplatte und einer bügelartig daran befestigten Hebeöse besteht und die Gewindehülse eine Wegstrecke ausführen kann, insbesondere für die Verwendung bei der Elektrodenstrang-Montage aus miteinander verschraubten Elektrodenabschnitten.

Elektrodenstränge für die Elektrostahlerzeugung bestehen gewöhnlich aus Elektrodenabschnitten, die durch sogenannte Elektrodennippel miteinander verschraubt werden. Dazu wird in die Elektrodenschachtel eines Elektrodenabschnitts der doppelkonusförmige Elektrodennippel zur Hälfte eingeschraubt und der nächste Elektrodenabschnitt mit einer Krananlage über die obere Hälfte des Elektrodennippels gebracht. Zum Verschrauben des Elektrodenabschnitts muss dieser in dem Maße abgesenkt werden, wie es der Steigung des Elektrodennippel- respektive des Elektrodenschachtel-Gewindes entspricht. Entsprechende Montagehilfsmittel sind aus dem Stande der Technik bereits bekannt. Die bekannten Montagehilfsmittel weisen den Nachteil auf, dass die Gewindehülse sich über eine längere Wegstrecke, wie für die Verschraubung eines Elektrodenabschnitts mit einem Elektrodennippel notwendig ist, bewegen lässt und dass sie vor dem vollständigen Herausdrehen nur durch einen Splint gesichert ist. Es besteht deshalb die Gefahr, dass beim Verschrauben eines Elektrodenabschnitts dieser aus dem Montagehilfsmittel der Hebevorrichtung herausgeschraubt wird und durch Herabstürzen Schäden am Bedienpersonal oder an den Anlagen verursacht.

Die Erfindung hat sich die Aufgabe gestellt, ein Montagehilfsmittel anzugeben, welches die Nachteile des Standes der Technik vermeidet.

Erfindungsgemäß wird die Aufgabe durch ein gattungsgemäß beschriebenes Montagehilfsmittel 1 gelöst, bei dem die Gewindehülse 4 mindestens eine solche Wegstrecke durch die Deckplatte 2 des Montagehilfsmittels 1 bewegt werden kann, wie für die Schraubverbindung eines Elektrodenabschnitts mit einem Nippel notwendig ist, wobei die Wegstrecke durch ein am oberen Ende der Gewindehülse 4 angeordnetes Sicherungselement 10 begrenzt ist, welches das Herausschrauben zuverlässig verhindert.

Weitere vorteilhafte Ausgestaltungen der Erfindung sind in den Ansprüchen 2 bis 9 dargelegt.

Vorteilhafter Weise ist das Montagehilfsmittel 1 eines, bei dem die Gewindehülse 4 in einem Schockdämpfungselement 6 geführt ist, welches aus einer Spiralfeder 7, einem an der Deckplatte 2 befestigten Haltekäfig 8 und einer Übertragungshülse 9 besteht.

Weitere bevorzugte Ausführungsformen des erfindungsgemäßen Montagehilfsmittels 1 bestehen darin, dass das Sicherungselement 10, welches durch das obere Ende der Gewindehülse geführt ist, aus einem Gewindebolzen mit Kronmutter oder einer Schraube mit Splint besteht.

Weiterhin bevorzugte Ausführungsformen des erfindungsgemäßen Montagehilfsmittels 1 bestehen darin, dass das Sicherungselement 10, das auf das obere Ende der Gewindehülse 4 aufgeschraubt ist, aus einer mit einem Splint gesicherte Mutter oder einer mit einer Imbusschraube gesicherten Hutmutter oder aus zwei gegeneinander gekonterten Muttern besteht.

Die Erfindung wird nachfolgend an Hand einer Figur näher und beispielhaft erläutert.

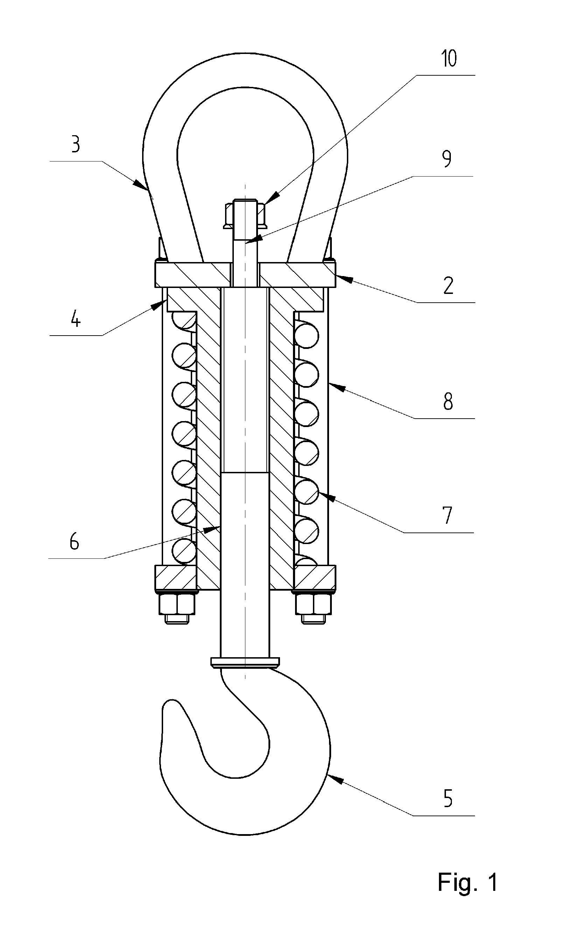

Figur 1 zeigt einen Längsschnitt durch ein erfindungsgemäßes Montagehilfsmittel. Das Montagehilfsmittel 1 besteht aus einer Deckplatte 2 und einer bügelartig daran befestigten Hebeöse 3. Die Gewindehülse 4 mit dem Haken 5 ist in einem Schockdämpfungselement 6 geführt. Das Schockdämpfungselement 6 besteht aus einer Spiralfeder 7, die sich in einem an der Deckplatte 2 befestigten Haltekäfig 8 befindet und einer Übertragungshülse 9, in die die Gewindehülse 4 mit dem Haken 5 eingeschraubt ist. Die Gewindehülse 4 kann mindestens eine solche Wegstrecke durch die Deckplatte 2 des Montagehilfsmittels 1 bewegt werden, wie für die Schraubverbindung eines Elektrodenabschnitts mit einem Nippel notwendig ist. Am oberen Ende der Gewindehülse 4 ist ein Sicherungselement 10 angeordnet, welches das Herausschrauben der Gewindehülse 4 zuverlässig verhindert. Das Sicherungselement 10 ist eine Hutmutter, die durch eine in sie eingeschraubte Imbusschraube gegen ein Verdrehen gesichert ist.

### Bezugszeichenliste:

1 - Montagehilfsmittel
2 - Deckplatte
3 - Hebeöse
4 - Gewindehülse
5 - Haken
6 - Schockdämpfungselement
7 - Spiralfeder
8 - Haltekäfig
9 - Übertragungshülse
10 - Sicherungselement

## Patentansprüche

1. Montagehilfsmittel (1) bestehend aus einer Gewindehülse (4) mit einem Haken (5), die beweglich in dem Montagehilfsmittel (1) angeordnet sind, wobei das Montagehilfsmittel (1) mindestens aus einer Deckplatte (2) und einer bügelartig daran befestigten Hebeöse (3) besteht und die Gewindehülse (4) eine Wegstrecke durch die Deckplatte (2) ausführen kann, insbesondere für die Verwendung bei der Elektrodenstrang-Montage aus miteinander verschraubten Elektrodenabschnitten, **dadurch gekennzeichnet, dass** die Gewindehülse (4) mindestens eine solche Wegstrecke durch die Deckplatte (2) des Montagehilfsmittels (1) bewegt werden kann, wie für die Schraubverbindung eines Elektrodenabschnitts mit einem Nippel notwendig ist, wobei die Wegstrecke durch ein am oberen Ende der Gewindehülse (4) angeordnetes Sicherungselement (10) begrenzt ist, welches das Herausschrauben zuverlässig verhindert.

2. Montagehilfsmittel nach Anspruch 1, **dadurch gekennzeichnet, dass** die Gewindehülse (4) in einem Schockdämpfungselement (6) geführt ist, welches aus einer Spiralfeder (7), einem an der Deckplatte (2) befestigten Haltekäfig (8) und einer Übertragungshülse (9) besteht.

3. Montagehilfsmittel nach Anspruch 1 oder 2, **dadurch gekennzeichnet, dass** das Sicherungselement (10) durch das obere Ende der Gewindehülse (4) geführt ist.

4. Montagehilfsmittel nach Anspruch 3, **dadurch gekennzeichnet, dass** das Sicherungselement (10) ein Gewindebolzen mit Kronmutter ist.

5. Montagehilfsmittel nach Anspruch 3, **dadurch gekennzeichnet, dass** das Sicherungselement (10) eine Schraube mit Splint ist.

6. Montagehilfsmittel nach Anspruch 1 oder 2, **dadurch gekennzeichnet, dass** das Sicherungselement (10) auf das obere Ende der Gewindehülse (4) aufgeschraubt ist.

7. Montagehilfsmittel nach Anspruch 6, **dadurch gekennzeichnet, dass** das Sicherungselement (10) eine mit einem Splint gesicherte Mutter ist.

8. Montagehilfsmittel nach Anspruch 6, **dadurch gekennzeichnet, dass** das Sicherungselement (10) eine mit einer Imbusschraube gesicherte Hutmutter ist.

9. Montagehilfsmittel nach Anspruch 6, **dadurch gekennzeichnet, dass** das Sicherungselement (10) aus zwei gegeneinander gekonterten Muttern besteht.
